# DEMANDE DE BREVET EUROPEEN

(11) **EP 3 196 079 A1**
(43) Date de publication de la demande: **26.07.2017**
(21) Numéro de dépôt: 17152348.3
(22) Date de dépôt: 20.01.2017
(51) Int. Cl.: B60R 16/037, G07C 9/00

(54) **SYSTEME DE COMMUNICATION AUTOMOBILE, ET METHODE DE PERSONNALISATION DES PARAMETRES D'UN VEHICULE EQUIPE D'UN DISPOSITIF D'ENTREE SANS CLE**

(30) Priorité: 25.01.2016 FR 1650543
(71) Demandeur: Dura Automotive Systems SAS, 91570 Bièvres (FR)
(72) Inventeur: THOORIS, Arnaud Georges, 92190 MEUDON (FR); ROCHÈS, Mickaël, 78470 SAINT-REMY-LÈS-CHEVREUSE (FR)
(74) Mandataire: Cabinet Laurent & Charras

(57) **Abrégé**

La présente invention concerne un système de communication automobile (1), comprenant : un véhicule (10) pilotable par un utilisateur, comportant des paramètres (P10) personnalisables et équipé d'un dispositif d'entrée sans clé (11) ; et un dispositif électronique personnel (20) portable par l'utilisateur et configuré pour établir une première communication sans fil (21) avec le dispositif d'entrée sans clé (11), autorisant l'utilisateur à accéder au véhicule (10). Le système (1) est caractérisé en ce que le dispositif électronique personnel (20) comporte des paramètres utilisateur (P20) et est configuré pour établir une seconde communication sans fil (22) avec le dispositif d'entrée sans clé (11), actualisant les paramètres (P10) du véhicule (10) avec les paramètres utilisateur (P20). L'invention a également pour objet une méthode de personnalisation des paramètres (P10) d'un véhicule (10), équipé d'un dispositif d'entrée sans clé (11).

## Description

La présente invention concerne un système de communication automobile. L'invention concerne également une méthode de personnalisation des paramètres d'un véhicule équipé d'un dispositif d'entrée sans clé.

Le domaine de l'invention est celui des véhicules automobiles équipés d'un dispositif d'entrée sans clé (« *keyless entry system* » en anglais).

De manière connue, un tel dispositif d'entrée sans clé est associé à une carte électronique, portée par un utilisateur du véhicule. Cette carte est configurée pour établir une communication sans fil avec le dispositif d'entrée sans clé, autorisant l'utilisateur à accéder au véhicule, lorsque la carte est située à une distance prédéterminée du dispositif.

Le but de la présente invention est de proposer un système de communication automobile amélioré, ainsi qu'une méthode de personnalisation des paramètres d'un véhicule équipé d'un dispositif d'entrée sans clé.

A cet effet, l'invention a pour objet un système de communication automobile, comprenant :
- un véhicule pilotable par un utilisateur, comportant des paramètres personnalisables et équipé d'un dispositif d'entrée sans clé ; et
- un dispositif électronique personnel portable par l'utilisateur et configuré pour établir une première communication sans fil avec le dispositif d'entrée sans clé, autorisant l'utilisateur à accéder au véhicule.

Le système de communication automobile est caractérisé en ce que le dispositif électronique personnel comporte des paramètres utilisateur et est configuré pour établir une seconde communication sans fil avec le dispositif d'entrée sans clé, actualisant les paramètres du véhicule avec les paramètres utilisateur.

Ainsi, l'invention facilite la personnalisation du véhicule par le conducteur ou par un autre utilisateur, en fonction de leurs préférences respectives.

Selon d'autres caractéristiques avantageuses de l'invention, prises isolément ou en combinaison :
- La première communication sans fil est établie automatiquement lorsque le dispositif électronique personnel est situé à une distance prédéterminée du dispositif d'entrée sans clé.
- La seconde communication sans fil est établie seulement si la première communication sans fil est déjà établie.
- La première communication sans fil utilise un standard NFC.
- La seconde communication sans fil utilise un standard Bluetooth.
- Le dispositif électronique personnel est un téléphone mobile.
- Le dispositif électronique personnel est une carte d'entrée passive.
- L'architecture comprend un serveur de données distant.
- L'architecture comprend au moins un autre dispositif électronique personnel configuré pour communiquer avec le dispositif d'entrée sans clé.

L'invention a également pour objet une méthode de personnalisation des paramètres d'un véhicule, équipé d'un dispositif d'entrée sans clé, caractérisée en ce que la méthode comprend les étapes successives suivantes :
a) un utilisateur du véhicule amène un dispositif électronique personnel comportant des paramètres utilisateur à une distance prédéterminée du dispositif d'entrée sans clé ;
b) le dispositif électronique personnel établit une première communication sans fil avec le dispositif d'entrée sans clé, autorisant l'utilisateur à accéder au véhicule ;
c) le dispositif électronique personnel établit une seconde communication sans fil avec le dispositif d'entrée sans clé, actualisant les paramètres du véhicule avec les paramètres utilisateur.

Selon d'autres caractéristiques avantageuses de l'invention, prises isolément ou en combinaison :
- Lorsque l'utilisateur modifie les paramètres du véhicule en cours d'utilisation, les paramètres utilisateur sont actualisés dans le dispositif électronique personnel.
- Les paramètres utilisateur sont modifiables par l'utilisateur directement sur le dispositif électronique personnel.
- Des paramètres d'initialisation enregistrés dans un serveur de données distant sont téléchargeables par l'utilisateur dans le dispositif électronique personnel.
- Les paramètres utilisateur enregistrés dans le dispositif électronique personnel sont transmissibles par l'utilisateur à un second dispositif électronique personnel.

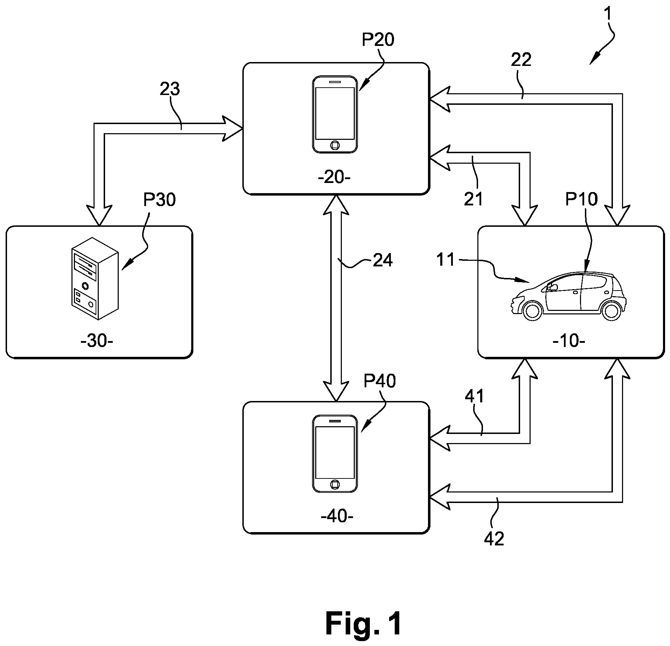

L'invention sera mieux comprise à la lecture de la description qui va suivre, donnée uniquement à titre d'exemple non limitatif et faite en référence à la figure 1 annexée, montrant un système de communication automobile 1 conforme à l'invention.

Sur l'exemple de la figure 1, le système 1 comprend un véhicule automobile 10, un premier téléphone mobile 20, un serveur de données distant 30 et un second téléphone mobile 40.

Le véhicule 10 est conçu pour être piloté par un utilisateur, qui est alors le conducteur. Le véhicule 10 comporte des paramètres P10 réglables, qui sont personnalisables par le conducteur ou un autre utilisateur. A titre d'exemples, ces paramètres P10 peuvent inclure la position des sièges, le réglage du dispositif de climatisation et chauffage, et la programmation de la radio. D'autres paramètres P10 du véhicule 10 peuvent être personnalisés sans sortir du cadre de l'invention.

Le véhicule 10 est équipé d'un dispositif d'entrée sans clé 11 (« *keyless entry system* » en anglais), permettant l'ouverture et la fermeture automatique des ouvrants du véhicule 10 par l'utilisateur, dans les conditions détaillées ci-après. Les ouvrants comprennent les portes et le coffre du véhicule 10.

Le téléphone 20 est un téléphone intelligent (« *smartphone* » en anglais), configuré pour communiquer selon différents standards de communication sans fil (notamment LTE, NFC, Bluetooth, Wifi, etc...) et pour exécuter différentes applications.

Dans le cadre de l'invention, le téléphone 20 constitue un dispositif électronique personnel (« *personal electronic device* » en anglais), portable par l'utilisateur et associé au dispositif d'entrée sans clé 11 du véhicule 10, par exemple via une application dédiée.

Le téléphone 20 est configuré pour établir une première communication sans fil 21 avec le dispositif 11, afin d'autoriser l'utilisateur à accéder au véhicule 10. La communication 21 utilise de préférence un standard NFC (« *Near Field Communication »* en anglais). La communication 21 est établie automatiquement lorsque le téléphone 20 est situé à une distance prédéterminée du dispositif 11.

Dans le téléphone 20 sont enregistrés des paramètres utilisateur P20, correspondant aux paramètres P10 réglables du véhicule 10.

Le téléphone 20 est configuré pour établir une seconde communication sans fil 22 avec le dispositif 11, afin d'actualiser les paramètres P10 du véhicule 10 avec les paramètres utilisateur P20. La communication 22 utilise de préférence un standard Bluetooth.

La communication 22 est établie automatiquement lorsque la communication 21 est déjà établie avec le dispositif 11. En alternative, la communication 22 peut être établie après authentification automatique (par clé d'identification) ou manuelle (par mot de passe).

Lorsque l'utilisateur modifie les paramètres P10 du véhicule 10 en cours d'utilisation, que ce soit à l'arrêt ou en circulation, les paramètres utilisateur P20 sont automatiquement actualisés dans le téléphone 20 via la communication 22.

Par ailleurs, les paramètres utilisateur P20 peuvent être modifiés par l'utilisateur directement sur le téléphone 20, par exemple via l'application dédiée.

Le téléphone 20 est configuré pour établir une communication sans fil 23 avec le serveur 30. La communication 23 utilise de préférence un standard Wifi, LTE, ou tout autre standard mobile avancé.

Ainsi, l'utilisateur peut télécharger des paramètres d'initialisation P30 propres au véhicule 10, depuis le serveur 30 vers son téléphone 20. Par la suite, les paramètres P20 enregistrés sur le téléphone 20 incluent les paramètres P30.

Selon un mode de réalisation préféré, les paramètres d'initialisation P30 sont nécessaires au téléphone 20 pour établir les communications 21 et 22 avec le véhicule 10. Ces paramètres P30 comprennent par exemple l'adresse Bluetooth du véhicule 1 et une clé d'identification. Ainsi, la communication 21 est établie automatiquement lorsque le téléphone 20 est situé à une distance prédéterminée du dispositif 11 et comporte les paramètres P30 téléchargés depuis le serveur 30.

Les paramètres d'initialisation P30 peuvent également inclure des valeurs par défaut correspondant aux paramètres P10 réglables du véhicule 10, tels que la position des sièges, le réglage du dispositif de climatisation et chauffage, et la programmation de la radio. D'autres paramètres P30 peuvent être prévus sans sortir du cadre de l'invention.

Le téléphone 40 constitue également un dispositif électronique personnel, associé au dispositif d'entrée sans clé 11 du véhicule 10. Dans le téléphone 40 sont enregistrés des paramètres utilisateur P40, correspondant aux paramètres P10 réglables du véhicule 10. Le téléphone 40 appartient à un second utilisateur, par exemple un membre de la famille, un ami ou un collègue de l'utilisateur du téléphone 20.

Le téléphone 40 est configuré pour établir des communications 41 et 42 avec le dispositif 1, analogues respectivement aux communications 21 et 22.

Les téléphones 20 et 40 sont configurés pour établir une communication sans fil 24 entre eux. Ainsi, le téléphone 20 peut partager les paramètres P20 avec le téléphone 40, en remplacement des paramètres P40

Par ailleurs, le système 1 peut être conformé différemment de la figure 1 sans sortir du cadre de l'invention.

En variante, le téléphone 20 et/ou 40 peut être remplacé par une carte d'entrée passive (« *passive entry card* »). Cette carte électronique constitue alors le dispositif électronique personnel présentant les caractéristiques détaillées ci-dessus pour le téléphone 20.

Selon une autre variante, le système 1 peut comprendre plus de deux dispositifs électroniques personnels 20 et 40 associés au dispositif 11 équipant le véhicule 10.

Selon une autre variante, le système 1 peut comprendre plusieurs véhicules 10 équipés de dispositifs 11 associés au même dispositif 20.

En outre, les caractéristiques techniques des différents modes de réalisation et variantes mentionnés ci-dessus peuvent être, en totalité ou pour certaines d'entre elles, combinées entre elles.

Ainsi, le système 1 et la méthode de personnalisation peuvent être adaptés en termes de coûts, d'ergonomie, de fonctionnalités et de performances.

## Revendications

1. Système de communication automobile (1), comprenant :
- un véhicule (10) pilotable par un utilisateur, comportant des paramètres (P10) personnalisables et équipé d'un dispositif d'entrée sans clé (11) ; et
- un dispositif électronique personnel (20) portable par l'utilisateur et configuré pour établir une première communication sans fil (21) avec le dispositif d'entrée sans clé (11), autorisant l'utilisateur à accéder au véhicule (10) ;
**caractérisé en ce que** le dispositif électronique personnel (20) comporte des paramètres utilisateur (P20) et est configuré pour établir une seconde communication sans fil (22) avec le dispositif d'entrée sans clé (11), actualisant les paramètres (P10) du véhicule (10) avec les paramètres utilisateur (P20).

2. Système de communication automobile (1) selon la revendication 1, **caractérisé en ce que** la première communication sans fil (21) est établie automatiquement lorsque le dispositif électronique personnel (20) est situé à une distance prédéterminée du dispositif d'entrée sans clé (11).

3. Système de communication automobile (1) selon l'une des revendications précédentes, **caractérisé en ce que** la seconde communication sans fil (22) est établie seulement si la première communication sans fil (21) est déjà établie.

4. Système de communication automobile (1) selon l'une des revendications précédentes, **caractérisé en ce que** la première communication sans fil (21) utilise un standard NFC.

5. Système de communication automobile (1) selon l'une des revendications précédentes, **caractérisé en ce que** la seconde communication sans fil (22) utilise un standard Bluetooth.

6. Système de communication automobile (1) selon l'une des revendications 1 à 5, **caractérisé en ce que** le dispositif électronique personnel (20) est un téléphone mobile.

7. Système de communication automobile (1) selon l'une des revendications 1 à 5, **caractérisé en ce que** le dispositif électronique personnel (20) est une carte d'entrée passive.

8. Méthode de personnalisation des paramètres (P10) d'un véhicule (10), équipé d'un dispositif d'entrée sans clé (11), **caractérisée en ce que** la méthode comprend les étapes successives suivantes :
a) un utilisateur du véhicule (10) amène un dispositif électronique personnel (20) comportant des paramètres utilisateur (P20) à une distance prédéterminée du dispositif d'entrée sans clé (11);
b) le dispositif électronique personnel (20) établit une première communication sans fil (21) avec le dispositif d'entrée sans clé (11), autorisant l'utilisateur à accéder au véhicule (10) ;
c) le dispositif électronique personnel (20) établit une seconde communication sans fil (22) avec le dispositif d'entrée sans clé (11), actualisant les paramètres (P10) du véhicule (10) avec les paramètres utilisateur (P20).

9. Méthode selon la revendication 8, **caractérisée en ce que** lorsque l'utilisateur modifie les paramètres (P10) du véhicule (10) en cours d'utilisation, les paramètres utilisateur (P20) sont actualisés dans le dispositif électronique personnel (20).

10. Méthode selon l'une des revendications 8 ou 9, **caractérisée en ce que** les paramètres utilisateur (P20) sont modifiables par l'utilisateur directement sur le dispositif électronique personnel (20).

11. Méthode selon l'une des revendications 8 à 10, **caractérisée en ce que** des paramètres d'initialisation (P30) enregistrés dans un serveur de données distant sont téléchargeables par l'utilisateur dans le dispositif électronique personnel (20).

12. Méthode selon l'une des revendications 8 à 11, **caractérisée en ce que** les paramètres utilisateur (P20) enregistrés dans le dispositif électronique personnel (20) sont transmissibles par l'utilisateur à un second dispositif électronique personnel (40).
